# DEMANDE DE BREVET EUROPEEN

(11) **EP 0 897 250 A1**
(43) Date de publication de la demande: **17.02.1999**
(21) Numéro de dépôt: 98401950.5
(22) Date de dépôt: 30.07.1998
(51) Int. Cl.: H04Q 7/32

(54) **Procédé amélioré de chargement d'une liste prédéterminée d'articles par un terminal mobile piloté par un module d'identification d'abonné, commande, et appareil correspondant**

(30) Priorité: 14.08.1997 FR 9710367
(71) Demandeur: ALCATEL ALSTHOM COMPAGNIE GENERALE D'ELECTRICITE, 75008 Paris (FR)
(72) Inventeur: Hubbe, Pascal, 75014 Paris (FR); Lelong-Gilbert, Anne-Gaelle, 78220 Viroflay (FR)
(74) Mandataire: Lamoureux, Bernard

(57) **Abrégé**

L'invention concerne un procédé amélioré de chargement d'une liste prédéterminée d'articles par un terminal mobile (43) piloté par un module d'identification d'abonné (44), dans lequel :
- le module d'identification d'abonné (44) émet, à destination du terminal (43), une commande de chargement d'articles de ladite liste,
- le terminal (43) reçoit et exécute ladite commande de chargement.
Les articles (41) de ladite liste sont répartis dans un ensemble d'au moins une commande de chargement (401, 402, 403) destinée(s) à être émise(s) successivement. Chaque commande de chargement (401, 402, 403) comprend un indicateur de fin de chargement (42), prenant une première ou une seconde valeur selon que ladite commande de chargement (401, 402, 403) est ou non la dernière (403) dudit ensemble.

## Description

Le domaine de l'invention est celui des systèmes de radio-communications et notamment, mais non exclusivement, des systèmes tels que le GSM" (pour "Global System for Mobile communications" en anglais) et le "DCS" 1800 (pour "Digital Cellular System" en anglais).

D'une façon générale, dans un tel système, l'usager dispose d'une station mobile constituée d'un terminal mobile qui coopère avec un module d'identification d'abonné (ou carte "SIM", pour "Subscriber Identity Module" en anglais, dans le standard GSM). Généralement, la carte SIM est une carte à puce destinée à être insérée dans un terminal mobile pour en permettre l'utilisation.

Plus précisément, l'invention concerne un procédé amélioré permettant de charger une liste prédéterminée d'articles dans un terminal mobile piloté par un module d'identification d'abonné.

De façon classique, le couple terminal/module d'identification d'abonné offre différentes fonctionnalités propres à l'abonné, au réseau et à la sécurité. Ces fonctionnalités sont par exemple :
- la possibilité de mémoriser des numéros abrégés (répertoires téléphoniques);
- la possibilité de mémoriser des messages courts ;
- la possibilité de mémoriser des opérateurs réseau préférentiels ;
- la possibilité d'obtenir des avis de consommation (cartes pré-payées) ;
- la possibilité de mémoriser une liste de numéros d'appel fixe (restriction des appels de l'abonné à la liste mémorisée dans le module d'identification d'abonné)
- la possibilité de mémoriser la gestion de l'itinérance (localisation de l'abonné dans le réseau GSM) ;
- la possibilité de mémoriser le numéro d'identification international de l'abonné mobile (selon les standards IMSI-TMSI);
- la possibilité de mémoriser des données caractéristiques de la cellule (telles que BCCH information) ;
- la possibilité d'authentifier l'abonné vis-à-vis du réseau ;
- la possibilité d'authentifier passive de l'abonné par un code secret CHV1.

Toutefois, un inconvénient important subsiste. En effet, le module d'identification d'abonné ne peut influencer directement le comportement du terminal mobile de l'utilisateur en gérant la présentation de nouveaux services à l'utilisateur.

De façon à pallier cet inconvénient, la recommandation GSM 11.14 phase 2⁺ définit toutes les bases pour implémenter une boîte à outils dans le module d'identification d'abonné et permettre aux opérateurs de créer leurs applications spécifiques indépendamment du terminal mobile utilisé à partir du moment où celui-ci supporte la recommandation GSM 11.14 phase 2⁺.

En outre, pour permettre d'assurer le dialogue et l'utilisation de la boîte à outils, la recommandation GSM 11.11 phase 2⁺ spécifie tous les mécanismes permettant l'interopérabilité entre les deux parties (le terminal mobile et le module d'identification d'abonné).

En d'autres termes, le module d'identification d'abonné dispose de commandes qu'il peut faire exécuter au terminal.

De façon classique, certaines commandes, et notamment les commandes "SET UP MENU" et "SELECT ITEM" dans le standard GSM visent à transmettre au terminal une liste d'articles (ou "items" en anglais). Par la suite, on appelle ces commandes "commandes de chargement". Actuellement, pour transmettre une même liste d'articles, le module d'identification d'abonné ne peut envoyer qu'une commande de chargement unique et l'envoi d'une nouvelle commande de chargement remplace en conséquence les articles précédents transmis.

Or, une même commande de chargement ne peut transmettre qu'un nombre limité d'octets (256 au maximum dans le cas GSM), ce qui équivaut à une liste moyenne de 18 articles environ (car la taille des articles est variable).

On comprend aisément qu'une telle limitation du nombre d'articles pouvant être chargés sur le terminal constitue une limitation des services à valeur ajoutée susceptibles d'être offerts par le couple terminal/module d'identification d'abonné. Ceci est d'autant plus gênant que les modules d'identification d'abonné disposent d'une taille mémoire de plus en plus grande, leur permettant de supporter un nombre très important de données et notamment de services.

L'invention a notamment pour objectif de pallier cet inconvénient majeur de l'état de la technique.

Plus précisément, l'un des objectifs de la présente invention est de fournir un procédé de chargement d'une liste prédéterminée d'articles dans un terminal mobile de radio-communication piloté par un module d'identification d'abonné, ce procédé permettant de s'affranchir de toute limitation du nombre d'articles à charger.

L'invention a également comme objectif de fournir une commande, un module d'identification d'abonné et un terminal mobile permettant la mise en oeuvre d'un tel procédé.

Un objectif complémentaire de l'invention est de fournir un tel procédé, une telle commande, un tel module d'identification d'abonné et un tel terminal mobile permettant d'optimiser l'utilisation des ressources disponibles sur le module d'identification d'abonné et le terminal mobile employés.

Un autre objectif complémentaire de l'invention est de fournir un tel procédé, une telle commande, un tel module d'identification d'abonné et un tel terminal mobile permettant de s'affranchir des différents types de terminaux mobiles utilisés.

Ces différents objectifs, ainsi que d'autres qui apparaîtront par la suite, sont atteints selon l'invention à l'aide d'un procédé amélioré de chargement d'une liste prédéterminée d'articles par un terminal mobile piloté par un module d'identification d'abonné. Ce procédé est du type comprenant les étapes suivantes :
- le module d'identification d'abonné émet, à destination du terminal, une commande de chargement d'articles de ladite liste,
- le terminal reçoit et exécute ladite commande de chargement, procédé dans lequel les articles de ladite liste sont répartis dans un ensemble de commandes comprenant au moins une commande de chargement, lorsque ledit ensemble comprend au moins deux commandes de chargement, les commandes étant destinées à être émises successivement.

Selon ce procédé, chaque commande de chargement comprend un indicateur de fin de chargement, prenant une première ou une seconde valeur selon que ladite commande de chargement est ou non la seule ou dernière dudit ensemble.

L'invention constitue donc une amélioration des commandes de chargement actuelles. En effet, le principe général de l'invention repose sur l'ajout d'un indicateur de fin de chargement dans chaque commande de chargement, de façon à indiquer au terminal mobile si d'autre(s) commande(s) de chargement sont à attendre pour le chargement des articles de la liste concernée.

Cette commande de chargement, avec son indicateur de fin de chargement, permet d'utiliser au mieux les capacités du module d'identification d'abonné et du terminal employés. En effet, la taille des mémoires correspondantes est suffisamment grande. En outre, elle permet au module d'identification d'abonné de charger un nombre quelconque d'articles dans le terminal. En d'autres termes, on s'affranchit de la limite actuelle de 256 octets (soit 18 articles en moyenne).

Il est clair que la commande de chargement de l'invention peut concerner le chargement de différents types d'articles. En effet, par article, on entend ici tout type d'informations et/ou de données ou une combinaison d'un ou plusieurs types d'informations et/ou données à charger dans le terminal. Il peut s'agir par exemple de numéros de téléphone et/ou de numéros de télécopies et/ou de chaînes interface homme-machine (ou "Man Machine Interface" en anglais), etc...

Il est clair que le module d'identification d'abonné peut envoyer successivement différents ensembles de commandes de chargement d'articles, de façon à charger différentes listes d'articles.

Il est à noter que l'invention n'impose aucune contrainte sur le nombre, la forme et la nature du ou des articles à charger. De même, l'invention n'impose aucune contrainte sur la nature de l'indicateur de fin de chargement.

Selon un mode de réalisation préférentiel de l'invention, ledit procédé comprend en outre une étape d'émission par ledit terminal et de réception par ledit module d'identification d'abonné d'un message de prise en compte de chaque commande de chargement dudit ensemble.

Ainsi, le terminal informe le module d'identification d'abonné du devenir de chaque commande de chargement que ce dernier lui a envoyée. Le message s'avère utile notamment dans le cas où le terminal ne peut exécuter chaque commande de chargement après réception de celle-ci (par exemple suite à un traitement de commande(s) prioritaire(s) et/ou en cours). Par ailleurs, le message indique que le terminal est prêt pour exécuter une autre commande, notamment une autre commande de chargement du même ensemble (afin d'ajouter un certain nombre d'article(s) à charger dans la liste d'articles déjà créée dans le terminal).

De façon avantageuse, lors d'une étape préalable, ledit terminal indique audit module d'identification d'abonné s'il est capable d'exécuter une commande de chargement du type comprenant un indicateur de fin de chargement.

Ainsi, cela évite au module d'identification d'abonné d'envoyer inutilement une commande de chargement avec indicateur de fin de chargement si le terminal mobile ne sait pas reconnaître et gérer un tel indicateur. L'étape préalable correspond par exemple à une étape d'initialisation ou à une étape effectuée à tout autre moment, notamment quand le module d'identification d'abonné a besoin d'envoyer un ensemble de commande(s) de chargement d'article(s). De cette manière, le module d'identification d'abonné sait s'il peut envoyer au terminal la commande de chargement du type comprenant un indicateur de fin de chargement.

L'invention concerne également une commande de chargement du type destinée à être utilisée lors du chargement d'une liste prédéterminée d'articles par un terminal mobile piloté par un module d'identification d'abonné, ladite commande étant émise par le module d'identification d'abonné à destination du terminal, de façon que le terminal l'exécute. Cette commande comprend un indicateur de fin de chargement, prenant une première ou une seconde valeur selon que ladite commande de chargement est ou non la seule ou dernière commande de chargement d'un ensemble de commandes comprenant au moins une commande de chargement dans laquelle sont répartis les articles de ladite liste prédéterminée d'articles. Lorsque ledit ensemble comprend au moins deux commandes de chargement, celles-ci sont destinées à être émises successivement.

De façon avantageuse, ladite commande appartient à un jeu de commandes du protocole de dialogue entre ledit terminal et ledit module d'identification d'abonné.

L'invention concerne également un module d'identification d'abonné du type destiné à piloter un terminal mobile de radio-communication avec lequel il coopère. Ce module d'identification d'abonné comprend des moyens d'émission vers ledit terminal, d'un ensemble de commandes comprenant au moins une commande de chargement dans laquelle sont répartis des articles d'une liste prédéterminée d'articles. Lorsque ledit ensemble comprend au moins deux commandes, celles-ci sont destinées à être émises successivement. Chaque commande de chargement comprend un indicateur de fin de chargement, prenant une première ou une seconde valeur selon que ladite commande de chargement est ou non la seule ou dernière dudit ensemble, l'exécution de ladite commande de chargement par ledit terminal permettant d'indiquer audit terminal si lesdits articles de ladite liste prédéterminée d'articles ont ou non été tous émis, en fonction de la valeur de l'indicateur de fin de chargement.

En outre, les moyens supplémentaires du module d'identification d'abonné sont simples à mettre en oeuvre, peu coûteux et ne nécessitent aucune restructuration profonde par rapport au module d'identification d'abonné connu.

De façon avantageuse, ledit module d'identification d'abonné comprend au moins certains des moyens appartenant au groupe comprenant :
- des moyens de stockage temporaire d'une commande de chargement du type comprenant un indicateur de fin de chargement ;
- des moyens de réception d'un message de prise en compte de chaque commande de chargement dudit ensemble.

Il est clair que le module d'identification d'abonné de l'invention peut disposer d'une bibliothèque, qui regroupe tous les types de commandes de chargement (pour différents types d'articles susceptibles d'être chargés) que peuvent utiliser différents terminaux. De cette manière, suite à un marquage quelconque du type d'article(s) que le terminal mobile utilise, le module d'identification d'abonné s'interdit d'envoyer les commandes de chargement que le terminal ne peut exécuter ou dont il n'a pas besoin.

L'invention concerne également un terminal mobile de radio-communication du type destiné à être piloté par un module d'identification d'abonné avec lequel il coopère.

Ce terminal mobile comprend :
- des moyens de réception d'un ensemble de commandes comprenant au moins une commande de chargement dans laquelle sont répartis des articles d'une liste prédéterminée d'articles, lorsque ledit ensemble comprend au moins deux commandes, celles-ci étant destinées à être émises successivement. Chaque commande de chargement comprend un indicateur de fin de chargement, prenant une première ou une seconde valeur selon que ladite commande de chargement est ou non la seule ou dernière dudit ensemble ;
- des moyens d'exécution de chaque commande de chargement dudit ensemble, de façon à indiquer audit terminal si lesdits articles de ladite liste prédéterminée d'articles ont ou non été tous émis par ledit module d'identification d'abonné, en fonction de la valeur de l'indicateur de fin de chargement.

Ainsi, le terminal mobile de l'invention est capable de recevoir, analyser, reconnaître, et exécuter un ensemble de commande(s) de chargement.

Il est clair que l'invention n'impose aucune contrainte quant à la durée nécessaire pour réaliser ces différentes opérations.

De même, l'invention n'impose aucune contrainte quant à un éventuel arrêt des tâches que le terminal est en train d'exécuter au moment de la réception de l'ensemble de commande(s) de chargement.

Selon un mode de réalisation préférentiel de l'invention, ledit terminal comprend en outre des moyens d'émission vers ledit module d'identification d'abonné d'un message de prise en compte de chaque commande de chargement dudit ensemble.

Ainsi, cela permet de tenir au courant le module d'identification d'abonné de l'état du terminal dans le traitement de chaque commande de chargement de l'ensemble.

D'autres caractéristiques et avantages de l'invention apparaîtront à la lecture de la description suivante d'un mode de réalisation préférentiel de l'invention, donné à titre de simple exemple indicatif et non limitatif, et des dessins annexés, dans lesquels :
- la figure 1 est un organigramme simplifié d'un mode de réalisation particulier du procédé selon l'invention ;
- la figure 2 présente un schéma simplifié d'un mode de réalisation particulier d'un module d'identification d'abonné selon l'invention mettant en oeuvre le procédé de la figure 1 ;
- la figure 3 présente un schéma simplifié d'un mode de réalisation particulier d'un terminal mobile selon l'invention, destiné à être piloté par le module d'identification d'abonné de la figure 2 ;
- la figure 4 illustre un schéma simplifié d'un mode de réalisation particulier d'une commande selon l'invention, mise en oeuvre par le procédé de la figure 1.

Dans la suite de la description, on se place dans le cas particulier d'un système de radiocommunication selon le standard GSM. Il est clair que l'homme du métier saura étendre les principes évoqués ci-dessous à d'autres types de systèmes de radiocommunication.

L'invention repose donc sur l'ajout d'un indicateur de chargement dans la commande de chargement d'articles, de manière à augmenter la capacité de chargement d'articles. En d'autres termes, la présente invention permet l'envoi de plusieurs commandes de chargement successives tout en indiquant au terminal dans chaque commande de chargement si une nouvelle commande de chargement fera suite ou non.

L'invention concerne également la commande, le SIM et le terminal permettant la mise en oeuvre de ce procédé.

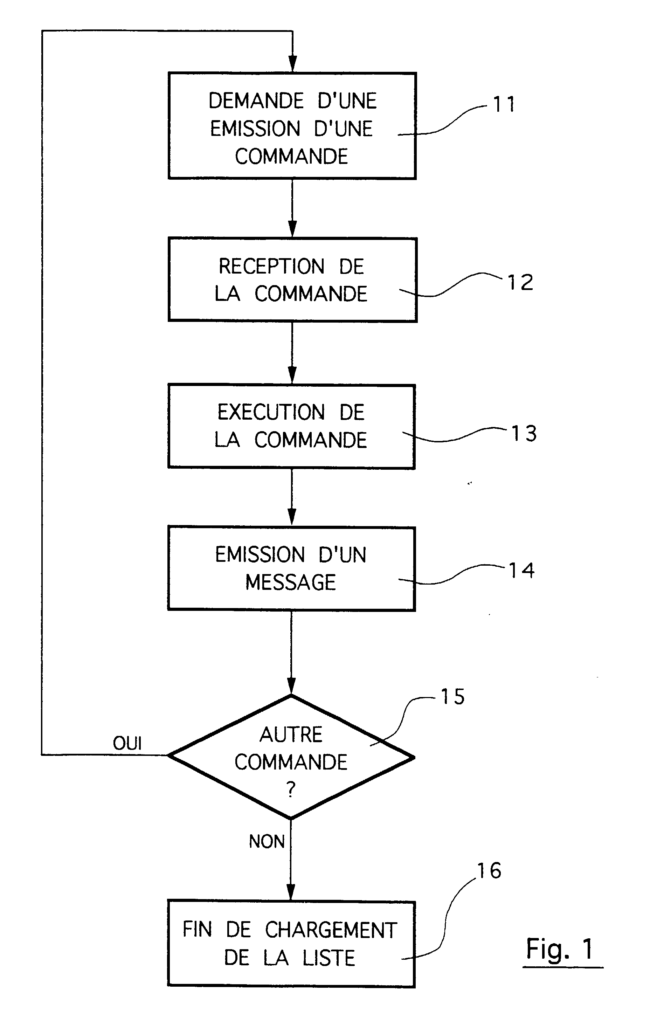

En relation avec l'organigramme de la figure 1, on présente maintenant un mode de réalisation particulier du procédé selon l'invention de chargement d'une liste prédéterminée d'articles par un terminal piloté par un SIM avec lequel il coopère.

Ce procédé comprend les étapes successives suivantes :
- le SIM demande à émettre (11) une commande de chargement d'articles contenant un indicateur de fin de chargement vers le terminal ;
- le terminal vient chercher (12) cette commande de chargement d'articles ;
- le terminal exécute (13) la commande de chargement d'articles reçue, l'indicateur de fin de chargement lui permettant de savoir si cette commande sera suivie ou non d'une autre commande de chargement ;
- le terminal émet (14) vers le SIM un message de prise en compte de la commande de chargement d'articles reçue, de façon à indiquer au SIM que le terminal a exécuté cette dernière ;
- le terminal examine (15) en fonction de la valeur de l'indicateur de fin de chargement si une autre commande de chargement est à prévoir;
- on reboucle à l'étape (11) si l'indicateur de fin de chargement indique au terminal que la commande précédente est suivie d'une autre commande de chargement d'articles contenant un indicateur de fin de chargement et si le SIM indique qu'il souhaite émettre de nouveau une commande vers le terminal ; dans le cas contraire, la liste d'article(s) (16) ainsi constituée est complète, et le chargement de la liste est donc terminé.

Les articles font partie d'une liste. De tels articles correspondent par exemple aux articles (ou "items" en anglais) de la terminologie GSM ou à tout type d'informations et/ou données ou encore à une combinaison de types différents d'informations et/ou données.

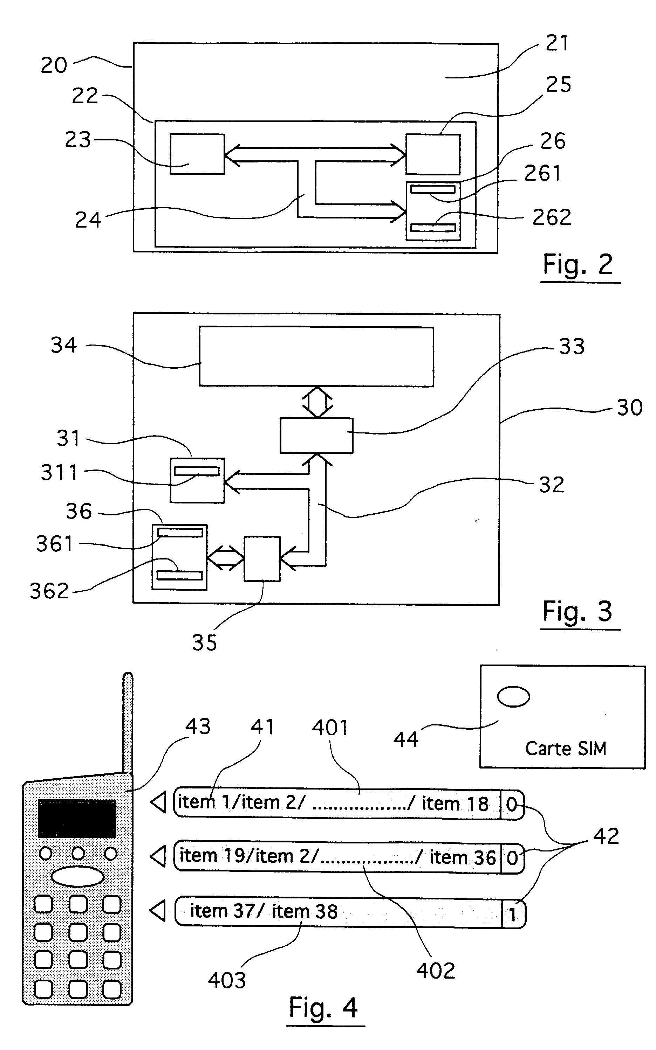

On présente maintenant, en relation avec le schéma simplifié de la figure 2, un SIM (ou plus généralement un module d'identification d'abonné) selon l'invention.

Ce SIM 20 est constitué notamment d'un support 21, qui porte une puce semi-conductrice 22. Celle-ci comprend notamment des moyens 23 de traitement et de gestion des données (par exemple un microprocesseur), organe central de décision qui pilote via un bus bi-directif 24 les autres moyens de la puce 22 (partiellement représentés 25, 26).

Sur la puce 22, des moyens de stockage de données 25 permettent de stocker, au moins temporairement, notamment une commande de chargement d'article(s) du type comprenant un indicateur de fin de chargement et destinée à être émise vers le terminal. Chaque commande de chargement est employée pour indiquer au terminal que cette commande sera suivie ou non d'une autre commande de chargement d'article(s), afin de charger de manière exhaustive une liste d'article(s).

Par ailleurs, la puce 22 comprend des moyens 26 de coopération destinés à coopérer avec des moyens de coopération associés (tel qu'un lecteur 36 cf figure 3) prévus sur le terminal. Ces moyens 26 de coopération comprennent notamment des moyens 261 d'émission vers le terminal d'un ensemble de commande(s) de chargement d'article(s), des moyens 262 de réception d'un message de prise en compte de chaque commande de chargement de l'ensemble issu du terminal.

Chaque commande de chargement comprend des articles à charger et un indicateur de fin de chargement qui peut prendre une première ou une seconde valeur afin de signaler que cette commande de chargement est ou non la dernière commande de l'ensemble à envoyer.

Le message de prise en compte de chaque commande de chargement indique au SIM que le terminal a effectivement enregistré la commande précédente de chargement de l'ensemble et qu'il l'a exécutée.

De cette manière, le terminal est capable de recevoir une autre commande, notamment une autre commande de chargement de l'ensemble.

Dans l'exemple présenté sur la figure 3, le terminal 30 de l'invention comprend des moyens 31 de traitement et de gestion des données (par exemple un microprocesseur), organe central de décision qui pilote via un bus bi-directif 32 les autres moyens du terminal.

Selon l'invention, ces moyens 31 de traitement et de gestion des données comprennent notamment des moyens 311 d'exécution par le terminal de chaque commande de chargement d'un ensemble. Ces moyens 311 d'exécution permettent notamment d'indiquer au terminal si la précédente commande de chargement sera ou non suivie par une autre commande de chargement de l'ensemble. Une telle opération permet un chargement exhaustif d'une liste d'article(s). Cette liste d'article(s) est éventuellement affichée via des moyens 33 d'interface sur des moyens 34 d'affichage du terminal.

Les moyens 31 de traitement et de gestion des données commandent notamment différents moyens 33 et 35 d'interface respectivement avec les moyens 34 d'affichage et le lecteur 36 de SIM. Ce lecteur 36 de SIM comprend notamment des moyens 361 de réception d'un ensemble de commande(s) de chargement destinée(s) à être reçue(s) successivement et dans la ou lesquelles sont répartis des article(s) d'une liste prédéterminée d'article(s).

De plus, le lecteur 36 comprend des moyens 362 d'émission d'un message de prise en compte de chaque commande de chargement de l'ensemble.

Selon les recommandations GSM 11.11 et 11.14, on utilise un jeu de commandes pour l'application du SIM dans une boîte à outils contenue dans la carte SIM (ou "SIM Application Toolkit" en anglais). Ce dernier regroupe un ensemble d'applications et de procédures associées pouvant être utilisé durant une session GSM. Ce "SIM Application Toolkit" présente notamment la façon dont un SIM peut interagir et opérer avec un terminal quelconque et incorpore à cet effet les mécanismes spécifiques requis par une application.

En particulier, dans le cadre du "SIM Application Toolkit", il est prévu que le SIM stocke dans un fichier appelé "SIM Service Table" une information qui indique qu'il sait envoyer au terminal des commandes, appartenant au groupe appelé "Proactive SIM", que le SIM peut faire exécuter par le terminal (si ce dernier est adapté en ce sens). Après une lecture-du SIM Service Table, le terminal signale au SIM par une commande appelée "Terminal Profile" la liste des commandes Proactive SIM que le terminal sait exécuter. Parmi les commandes du Proactive SIM, on compte notamment des commandes de choix d'article(s) d'un menu (ou "SET UP MENU"en anglais), de sélection d'un article parmi une liste d'articles (ou "SELECT ITEM"en anglais).

L'invention vise précisément à améliorer les commandes de chargement du "Proactive SIM". L'invention peut notamment être mise en oeuvre avec les commandes "SET UP MENU" et "SELECT ITEM".

On rappelle que de façon classique, après qu'il a été mis en coopération avec le terminal, le SIM cherche à savoir ce que le terminal est capable d'effectuer, notamment en terme de commandes. Pour cela, lors d'une étape préalable, un message appelé "Terminal Profile" d'une procédure appelée "Profile Download" est envoyé du terminal vers le SIM. Dans ce message, le terminal indique au SIM la liste des commandes qu'il est capable de reconnaître et d'exécuter. Par conséquent, selon les cas, la commande de chargement du type comprenant un indicateur de fin de chargement de la présente invention fait ou ne fait pas partie de cette liste.

Dans l'exemple présenté sur la figure 4, l'ensemble de commande(s) comprend trois commandes de chargement (401, 402, 403) successives. Chaque commande de chargement (401, 402, 403) comprend notamment des items 41 (articles) et un indicateur de fin de chargement (42). Cet indicateur peut être notamment un drapeau (ou "flag" en anglais). Ce drapeau prend par exemple soit la valeur "0", si le terminal (43) doit s'attendre au moins à une nouvelle commande de chargement contenant la suite des items, soit la valeur "1", pour signaler que tous les items ont été émis par le SIM (44) et que la commande en cours est la dernière (403).

On notera que, bien que la description qui précède corresponde plus particulièrement au cas où la commande de chargement de l'invention est stockée dans la liste des commandes "Proactive SIM" du SIM et est une commande "SELECT ITEM" ou "SET UP MENU", il serait aussi possible de stocker cette commande dans d'autres fichiers du SIM et/ou d'appliquer le principe de l'invention à d'autres types de commandes de chargement.

## Revendications

1. Procédé amélioré de chargement d'une liste prédéterminée d'articles par un terminal mobile (43) piloté par un module d'identification d'abonné (44), ledit procédé étant du type comprenant les étapes suivantes :
- le module d'identification d'abonné (44) émet, à destination du terminal (43), une commande de chargement d'articles de ladite liste,
- le terminal (43) reçoit et exécute ladite commande de chargement, caractérisé en ce que les articles (41) de ladite liste sont répartis dans un ensemble de commandes comprenant au moins une commande de chargement (401, 402, 403), lorsque ledit ensemble comprend au moins deux commandes de chargement, lesdites commandes étant destinées à être émises successivement ; et en ce que chaque commande de chargement (401, 402, 403) comprend un indicateur de fin de chargement (42), prenant une première ou une seconde valeur selon que ladite commande de chargement (401, 402, 403) est ou non la seule ou dernière (403) dudit ensemble.

2. Procédé selon la revendication 1, caractérisé en ce qu'il comprend en outre une étape d'émission (14) par ledit terminal (30) et de réception par ledit module d'identification d'abonné (20) d'un message de prise en compte de chaque commande de chargement (401, 402, 403) dudit ensemble.

3. Procédé selon l'une quelconque des revendications précédentes, caractérisé en ce que, lors d'une étape préalable, ledit terminal (30) indique audit module d'identification d'abonné (20) s'il est capable d'exécuter une commande de chargement (401, 402, 403) du type comprenant un indicateur de fin de chargement (42).

4. Commande de chargement (401, 402, 403) du type destinée à être utilisée lors du chargement d'une liste prédéterminée d'articles par un terminal mobile (30) piloté par un module d'identification d'abonné (20), ladite commande (401, 402, 403) étant émise par le module d'identification d'abonné (44) à destination du terminal (43), de façon que le terminal (43) l'exécute,
caractérisée en ce qu'elle comprend un indicateur de fin de chargement (42), prenant une première ou une seconde valeur selon que ladite commande de chargement (401, 402, 403) est ou non la seule ou dernière commande (403) de chargement d'un ensemble d'au moins une commande de chargement (401, 402, 403) dans laquelle sont répartis les articles (41) de ladite liste prédéterminée d'articles, lorsque ledit ensemble comprend au moins deux commandes de chargement, lesdites commandes étant destinées à être émises successivement.

5. Commande (401, 402, 403) selon la revendication 4, caractérisée en ce qu'elle appartient à un jeu de commandes du protocole de dialogue entre ledit terminal (30) et ledit module d'identification d'abonné (20).

6. Module d'identification d'abonné (20) du type destiné à piloter un terminal mobile de radio-communication avec lequel il coopère, caractérisé en ce qu'il comprend des moyens (261) d'émission vers ledit terminal d'un ensemble de commandes comprenant au moins une commande de chargement (401, 402, 403) dans laquelle sont répartis des articles (41) de ladite liste prédéterminée d'articles, lorsque ledit ensemble comprend au moins deux commandes de chargement, lesdites commandes étant destinées à être émises successivement, chaque commande de chargement (401, 402, 403) comprenant un indicateur de fin de chargement (42), prenant une première ou une seconde valeur selon que ladite commande de chargement (401, 402, 403) est ou non la seule ou dernière commande (403) dudit ensemble, l'exécution de ladite commande de chargement (401, 402, 403) par ledit terminal (30) permettant audit terminal (30) de savoir en fonction de la valeur dudit indicateur de fin de chargement si tous les articles (41) de ladite liste ont été émis.

7. Module d'identification d'abonné (20) selon la revendication 6, caractérisé en ce qu'il comprend au moins certains des moyens appartenant au groupe comprenant :
- des moyens (25) de stockage temporaire d'une commande de chargement (401) du type comprenant un indicateur de fin de chargement (42) ;
- des moyens (262) de réception d'un message de prise en compte de chaque commande de chargement (401, 402, 403) dudit ensemble.

8. Terminal mobile (30) de radio-communication du type destiné à être piloté par un module d'identification d'abonné (20) avec lequel il coopère, caractérisé en ce qu'il comprend
- des moyens (361) de réception d'un ensemble de commandes comprenant au moins une commande de chargement (401, 402, 403) dans laquelle sont répartis des articles (41) de ladite liste prédéterminée d'articles,
lorsque ledit ensemble comprend au moins deux commandes de chargement, lesdites commandes étant destinées à être émises successivement,
chaque commande de chargement (401, 402, 403) comprenant un indicateur de fin de chargement (42), prenant une première ou une seconde valeur selon que ladite commande de chargement (401, 402, 403) est ou non la seule ou dernière commande (403) dudit ensemble ;
- des moyens d'exécution (311) de chaque commande de chargement (401, 402, 403) dudit ensemble, de façon que ledit terminal (30) sache en fonction de la valeur dudit indicateur de fin de chargement si tous les articles (41) de ladite liste ont été émis par ledit module d'identification d'abonné (20).

9. Terminal (30) selon la revendication 8, caractérisé en ce qu'il comprend en outre des moyens d'émission (362) vers ledit module d'identification d'abonné (20) d'un message de prise en compte de chaque commande de chargement (401, 402, 403) dudit ensemble.
